# EUROPEAN PATENT APPLICATION

(11) **EP 4 757 237 A1**
(43) Date of publication of application: **10.06.2026**
(21) Application number: 24863066.7
(22) Date of filing: 16.08.2024
(51) Int. Cl.: H04L 9/08, H04L 9/32, H04L 9/30

(54) **ELECTRONIC DEVICE FOR PROVIDING SECURITY FUNCTION, AND OPERATION METHOD THEREOF**

(30) Priority: 05.09.2023 KR 20230117695; 28.11.2023 KR 20230167547
(71) Applicant: Samsung Electronics Co., Ltd., Suwon-si, Gyeonggi-do 16677 (KR)
(72) Inventor: LEE, Sungmin, Suwon-si, Gyeonggi-do 16677 (KR)
(74) Representative: Gulde & Partner
(86) International application number: PCT/KR2024/012218
(87) International publication number: WO 2025/053485

(57) **Abstract**

An electronic device according to various embodiments may comprise: a main processor for performing an operation in a rich execution environment (REE) and a trusted execution environment (TEE); and a secure processor (223) physically separated from the main processor so as to perform an operation in a secure execution environment (SEE). The main processor may, in performing an electronic signature (sig) and key encapsulation mechanism (KEM) operation: identify a calculation speed when the operation is executed in any one of the TEE or the SEE; and on the basis of the identified calculation speed, differently determine an execution environment in which the sig and KEM operation is performed, and the execution environment comprises the SEE and the TEE.

## Description

### [Technical Field]

The present document relates to an electronic device, and, specifically, relates to an electronic device for providing a security function and an operation method thereof.

### [Background Art]

Recently, a mobile device including a smartphone or a device requiring security and privacy may provide hardware support (Hardware-backed) security technology at a processor level.

A computational processing of the processor is classified into a rich execution environment (REE) and a trusted execution environment (TEE). Accordingly, even if the operating system (OS) located in the REE is rooted (i.e., seizing administrator privileges) by an attacker, direct access of the attacker to the TEE region of the device may be restricted.

The TEE is physically separated from the REE at a register level inside the processor, but, in a case of peripheral devices such as RAM and Flash outside the processor, without being physically separated, an execution environment may be logically separated through encryption, access control, and the like. Accordingly, an attacker may not generally access plain-text data stored in the TEE region, but, after rooting, the attacker may be able to access encrypted data. In a case where an attacker arbitrarily damages encrypted important data, the electronic device may fall into a denial of service (DoS) state.

The electronic device may, in order to prevent falling into the denial of service (DoS) state, separately support a secure execution environment (SEE) physically separating all execution environments from a main processor.

### [Disclosure of Invention]

### [Technical Problem]

In modern computing, since a key length increases, a number of cases exponentially increases, and thus, calculation required for cryptanalysis also increased exponentially, but, in quantum computing, an increase of the key length may not lead to an exponential calculation amount increase.

Since, in a case where quantum computing is implemented, most modern public key cryptography may be neutralized, a need exists to provide security of a level higher than the trusted execution environment (TEE) by using the secure execution environment (SEE) in preparation for quantum computing. In the secure execution environment (SEE), an execution environment including a processor and a memory may be limited.

The electronic device according to various embodiments of the present document may, in a secure execution environment configured of a plurality of models including the TEE and the SEE, efficiently universally support PQC.

The electronic device according to various embodiments may include a main processor that performs an operation in the rich execution environment (REE) and the trusted execution environment (TEE) and a secure processor 223 which is physically separated from the main processor and performs an operation in the secure execution environment (SEE). The main processor may, in performing an electronic signature (sig) and key encapsulation mechanism (KEM) operation, identify a calculation speed when the operation is executed in any one of the trusted execution environment (TEE) or the secure execution environment (SEE), and, based on the identified calculation speed, differently determine an execution environment in which the electronic signature (sig) and key encapsulation mechanism (KEM) operation is performed, and the execution environment may include the secure execution environment (SEE) and the trusted execution environment (TEE).

An operation method of the electronic device according to various embodiments may include, in performing an electronic signature (sig) and key encapsulation mechanism (KEM) operation, an operation of identifying a calculation speed when the operation is executed in any one of the trusted execution environment (TEE) or the secure execution environment (SEE) and an operation of differently determining an execution environment in which the electronic signature (sig) and key encapsulation mechanism (KEM) operation is performed based on the identified calculation speed.

The electronic device according to various embodiments of the present document may, without fixing an environment for execution of a PQC algorithm to the secure execution environment (SEE) having a relatively high security level or to the trusted execution environment (TEE) having a relatively fast calculation speed, use all of a plurality of environments for each situation. The electronic device, in consideration of characteristics of a PQC algorithm, may perform a KEM algorithm in the trusted execution environment (TEE) having a relatively fast calculation speed. On the other hand, the electronic device may perform a final signature of a certificate including a public key in the secure execution environment (SEE) having a relatively high security level. The electronic device may perform the final signature of the certificate in the secure execution environment (SEE) having a relatively high security level, thereby being able to maintain verification and a security level of the certificate at a level of the secure execution environment (SEE).

The electronic device according to various embodiments of the present document may, by omitting at least one operation of transmission of an encrypted (wrapped) PQC electronic signature private key, derivation of a KEK capable of decrypting an encrypted PQC private key, or decryption (unwrapping) of the PQC electronic signature private key, reduce time required for encryption and calculation.

### [Brief Description of Drawings]

FIG. 1 is a block diagram illustrating an electronic device in a network environment according to various embodiments.
FIG. 2 is a block diagram illustrating a security direct circuit of an electronic device according to an embodiment.
FIG. 3A illustrates, as a block diagram, components according to an execution environment of the electronic device according to an embodiment.
FIG. 3B illustrates, as a block diagram, a storage location of a plurality of keys in the electronic device.
FIG. 3C illustrates a structure of a chain of trust according to an embodiment.
FIG. 4 is a block diagram describing a process in which a key pair for electronic signature is generated in the electronic device according to an embodiment.
FIG. 5 is a block diagram describing a process in which a KEM key pair is generated in the electronic device according to an embodiment.
FIG. 6 is a block diagram describing a process of performing electronic signature based on a secure execution environment (SEE) in the electronic device according to an embodiment.
FIG. 7 illustrates, as a flowchart, a method of providing a security function in the electronic device according to an embodiment.
FIG. 8 illustrates, as a flowchart, an operation method of the electronic device according to an embodiment.

### [Mode for the Invention]

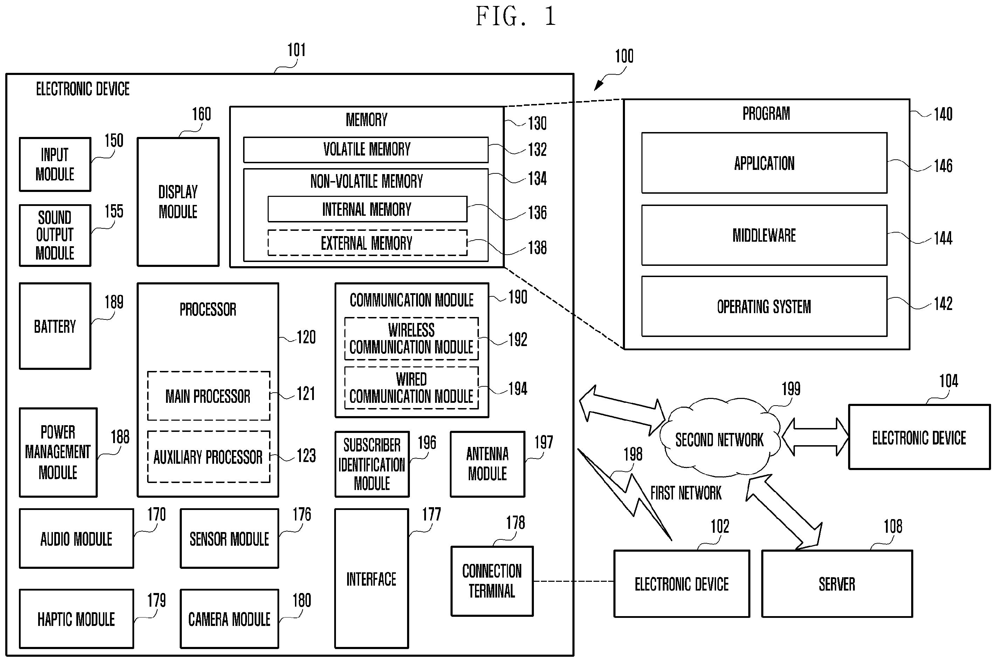

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

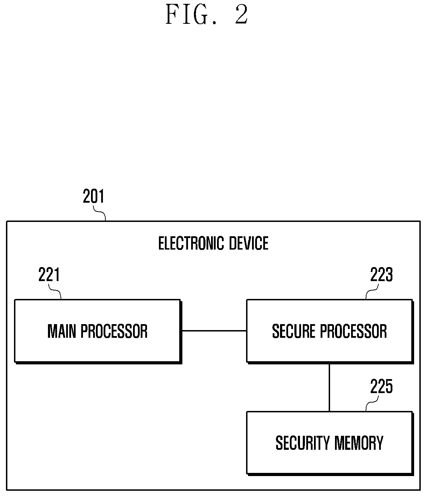

FIG. 2 is a block diagram illustrating a security direct circuit of an electronic device according to an embodiment.

With reference to FIG. 2, an electronic device 201 (e.g., the electronic device 101) according to an embodiment of the present document may include a secure integrated circuit (IC) of a system on chip (SoC) providing a rich execution environment (REE), a trusted execution environment (TEE), and a secure execution environment (SEE). Alternatively, the trusted execution environment (TEE) may be in a state physically separated from the rich execution environment (REE).

In an embodiment, the trusted execution environment (TEE), or the secure execution environment (SEE), may have a relatively higher security level than the rich execution environment (REE) requiring a general security level. In an embodiment, the trusted execution environment (TEE), or the secure execution environment (SEE), may be an environment in which a program (e.g., the program 140) operates based on resources distinguished from resources allocated to the rich execution environment (REE).

In an embodiment, the trusted execution environment (TEE), or the secure execution environment (SEE), may not allow accessing, on an unauthorized program, resources in the trusted execution environment (TEE), or resources in the secure execution environment (SEE). In an embodiment, the secure execution environment (SEE) may have a relatively higher security level than the trusted execution environment (TEE). In an embodiment, the secure execution environment (SEE) or the trusted execution environment (TEE) may be a software-separated execution environment, not a physically separated execution environment. For example, an operating system (e.g., the operating system 142) executed in the electronic device 201, in the rich execution environment (REE), while providing a service through a general application, when performing an operation requiring reliability with high security, may switch to the secure execution environment (SEE) or the trusted execution environment (TEE), and may execute an application for providing a service requiring separate reliability.

For example, when performing a financial transaction, or, when performing a function requiring reliability such as fingerprint authentication of a user or password input, password authentication, the electronic device 201 may execute a biometric authentication application performed in the trusted execution environment (TEE) or the secure execution environment (SEE), and may perform authentication of the user.

In an embodiment, the secure execution environment (SEE) or the trusted execution environment (TEE) may be a physically separated execution environment. For example, through a hardware-separated environment of a security memory 225 or a secure processor 223 in which a separate security region is constructed, a function requiring high security may be provided to a user. For example, a main processor 221 may include a plurality of core processors. In an embodiment, according to a type of an application used in the electronic device 201, the main processor 221 may select at least one among the plurality of core processors and may perform the application. For example, in a case of a normal mode (e.g., the rich execution environment (REE)), the electronic device 201 may select some among core processors of the main processor 221 and may perform a general application, and, in a case of a security-required mode (e.g., the secure execution environment (SEE) or the trusted execution environment (TEE)), the electronic device 201 may access a security region through a security core processor, not a general core processor of the main processor 221, and may execute a security application.

In an embodiment, the main processor 221 may operate in the rich execution environment, the trusted execution environment, or a combination thereof. In an embodiment, the main processor 221 may control processing and calculation of data in the rich execution environment, and/or the trusted execution environment.

In an embodiment, the electronic device 201 may include the main processor 221 (e.g., the main processor 121), the secure processor 223 (e.g., the auxiliary processor 123), and the security memory 225.

In an embodiment, the secure processor 223 may be operatively connected and communicate with the main processor 221. In an embodiment, the secure processor 223 may receive, from the main processor 221, a driving or initialization request of the secure execution environment. In an embodiment, the secure processor 223 may operate in the secure execution environment.

In an embodiment, the secure processor 223 may further include various configurations. In an embodiment, the secure processor 223 may further include a secure cache, ROM, RAM, a memory controller (MEM controller), security sensors, or a combination thereof.

In an embodiment, the security memory 225 may be operatively connected with the secure processor 223. In an embodiment, the security memory 225 may perform encrypted communication by using a key shared in advance with the secure processor 223. In an embodiment, the security memory 225 may be a non-volatile memory (NVM) memory.

In FIG. 2, although illustrating that the secure processor 223 is provided in the electronic device 201, the illustration is only an example. In an embodiment, in a case where the secure processor 223 is not provided in the electronic device 201, the main processor 221 may perform the role of the secure processor 223. In such a case, a function of the security memory 225 may also be provided through a memory (e.g., the memory 130) operating in the rich execution environment (REE) or the trusted execution environment (TEE).

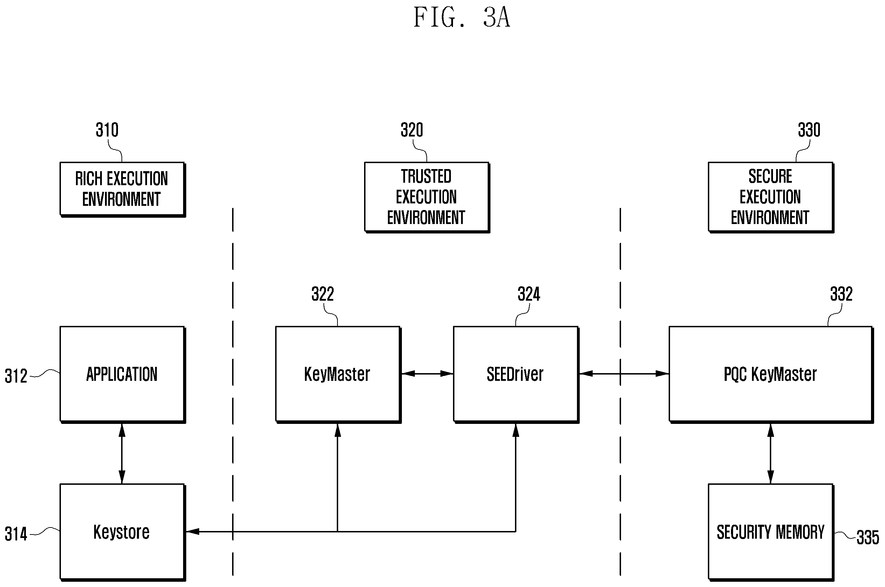

FIG. 3A illustrates, as a block diagram, components according to an execution environment of the electronic device according to an embodiment.

The electronic device (e.g., the electronic device 201 of FIG. 2) may include the main processor (e.g., the main processor 221 of FIG. 2) and the secure processor (e.g., the secure processor 223 of FIG. 2).

The main processor 221 may receive, in the rich execution environment (REE) 310, a security-related request from at least one application 312. The application 312 may mean at least one app utilizing PQC for security enhancement. The application 312, for example, may be related to execution of any one of banking, cards, simple payment (e.g., pay), or electronic commerce.

KeyStore 314 may mean a module providing a cryptographic operation application program interface (API) supported by the REE OS.

KeyMaster 322 may mean one among applications operating in the trusted execution environment 320 by the main processor 221. KeyMaster 322 may provide, to KeyStore 314 operating in the rich execution environment 310, trustworthy cryptographic operation (i.e., calculation, computation) performed in the trusted execution environment 320.

SEEDriver 324 may perform communication between the trusted execution environment (TEE) 320 and the secure execution environment (SEE) 330. Software may use a standard APDU protocol, and a hardware communication channel may utilize security-enhanced Secure SPI. This configuration may vary depending on implementation.

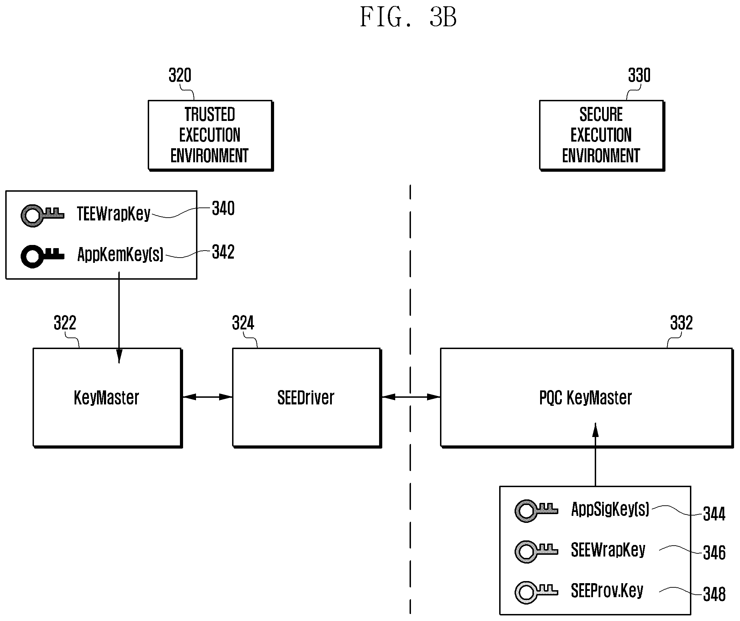

FIG. 3B illustrates, as a block diagram, a storage location of a plurality of keys in the electronic device.

TEEWrapKey 340 and AppKEMKey 342 may be stored in KeyMaster 322 of the trusted execution environment 320. A key encapsulation mechanism (KEM) algorithm may include a method of encrypting a symmetric key with a public key for transmission. AppKEMKey 342 means a key pair (e.g., a public key and a secret key) of a KEM algorithm generated by a request of the application 312. AppKEMKey 342 may be generated in the trusted execution environment 320, receive a signature in the secure execution environment 330, be encrypted in the trusted execution environment 320, and be stored in KeyStore 314 of the rich execution environment 310.

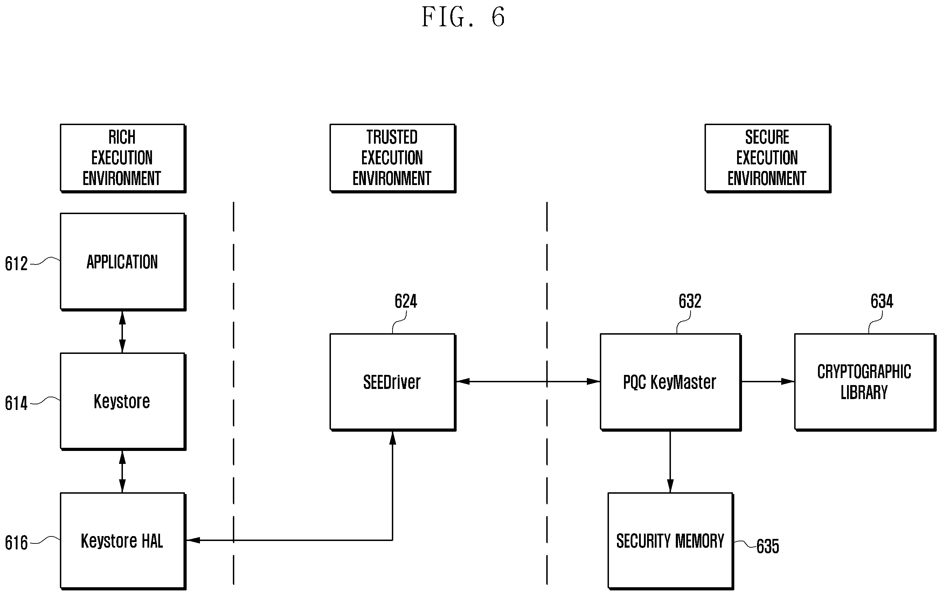

PQC KeyMaster 332 is a module providing trustworthy cryptographic operation performed in the secure execution environment 330 through SEEDriver 324 of the trusted execution environment 320. Depending on implementation, PQC KeyMaster 332 may include a hardware acceleration function supported in the secure execution environment 330. AppSigKey 344 and SEEWrapKey 346 may be stored in StorageManager (e.g., a security memory 635 of FIG. 6) of the secure execution environment 330.

SEE Provisioned Key 348 may be stored in a ROM region of the secure execution environment 330 to which only PQC KeyMaster 332 may access. The ROM region of the SEE may mean a region for which integrity is guaranteed by a manufacturer.

The security memory 335 (e.g., the security memory 225 of FIG. 2) may mean a module managing storage of the secure execution environment 330. The security memory 335 may perform the role of an additional storage subordinated to KeyStore 314 located in the rich execution environment 310.

SEE Provisioned Key 348 may mean a unique key pair of a PQC electronic signature algorithm. The secure processor 223 may, in the secure execution environment 330, protect so that a secret key of the key pair is not exposed outside the secure execution environment 330. SEE Provisioned Key 348 may be stored in a ROM region when mass-produced by a manufacturer of the secure processor 223. SEE Provisioned Key 348 may, depending on implementation, utilize a specific algorithm (e.g., a Dilithium algorithm of a security level 3). A certificate including a public key of a key pair of SEE Provisioned Key 348 may receive a signature of a manufacturer at a mass-production point in time of the secure processor 223.

AppSigKey 344 may mean a key pair of a PQC signature algorithm for which the application 312 requested generation in the rich execution environment 310. AppSigKey 344 may be generated in the secure execution environment 330, encrypted in the secure execution environment 330, and generally stored in the rich execution environment 310, but, according to the present document, AppSigKey 344 may be additionally stored in the secure execution environment 330 in a plain-text state. Plain text may mean a bit string or a character string to which a cryptographic algorithm is not applied. Cipher text may mean a bit string, or a character string to which a cryptographic algorithm is applied.

At least one application 312 may request generation of a specific PQC key pair through an API. A public key of the specific PQC key pair requested to be generated is issued as a certificate including a signature generated by using a private key of a Provisioned Keypair possessed by the secure execution environment 330 which is an issuer. The Provisioned Keypair may have a certificate signed with a private key of a manufacturer. A key generated in at least one application 312 may generate a chain of trust.

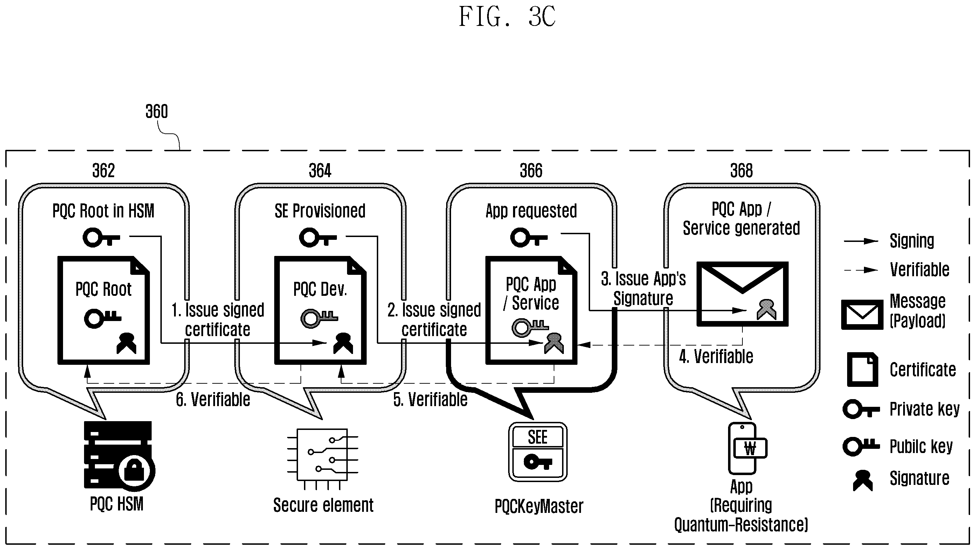

FIG. 3C illustrates a structure of a chain of trust according to an embodiment.

A chain of trust 360 may start from a root certificate possessed by an HSM supporting PQC. In drawing 362, a root certificate of the HSM may have a self-signed signature. The root certificate of the HSM may perform a role in which a manufacturer of the HSM guarantees that a secret key of a PQC root key pair is not leaked outside the HSM. Accordingly, an external producer (e.g., 3rd party) may store a self-signed certificate issued by the HSM in a region for which integrity is guaranteed (e.g., KeyStore 314).

In drawing 364, a certificate issued by using a PQC root secret key stored in the HSM may be stored in the secure processor 223 (e.g., SE (secure element) or eSE) providing the secure execution environment 330. A manufacturer of the secure processor 223 may guarantee that a secret key of a PQC key pair possessed by the secure processor 223, similarly to the HSM, is not leaked outside the secure processor 223.

In drawing 366, plain text of a PQC secret key generated by at least one application 312 may not be leaked outside the secure execution environment 330. An external server may have difficulty trusting a public key included in a certificate transferred from at least one application 312. In this case, the external server may perform verification of a signature of an issuer recorded in the certificate. The external server may determine, based on a verification result, that at least one application 312 uses a key protected in the secure execution environment 330.

The external server may have difficulty trusting the secure execution environment 330. In drawing 368, the external server may identify whether a certificate of the secure execution environment 330 has an electronic signature issued by the HSM. The external server may, in a case where the certificate of the secure execution environment 330 includes an electronic signature issued by the HSM, trust a certificate of at least one application 312.

The electronic device 201 may, by using the chain of trust 360 among the HSM, the secure processor 223 operating in the secure execution environment 330, and the application 312, provide a trustworthy security level even if quantum computing capable of performing large-scale operation (i.e., calculation, computation) is realized.

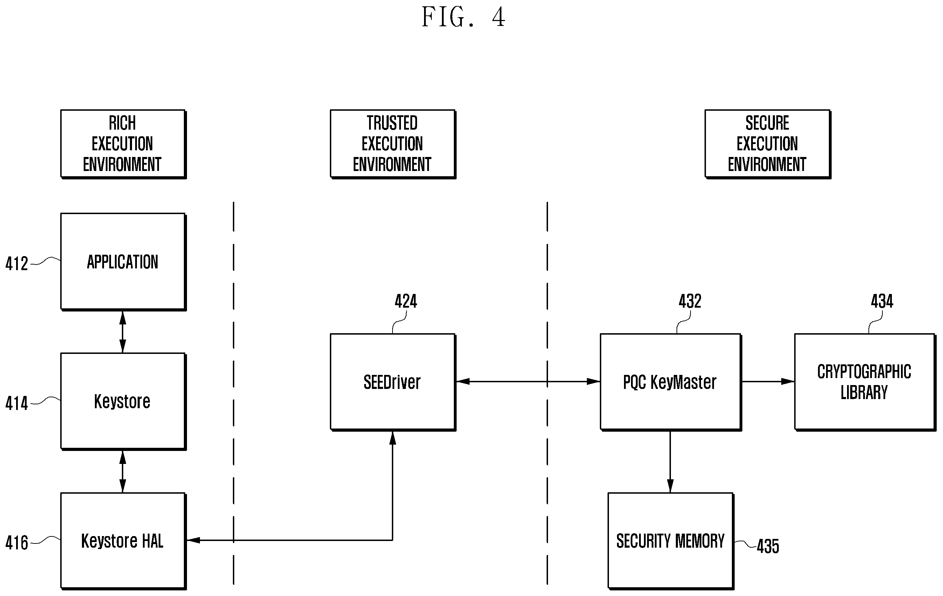

FIG. 4 is a block diagram describing a process in which a key pair for electronic signature is generated in the electronic device according to an embodiment.

According to FIG. 4, the electronic device (e.g., the electronic device 201 of FIG. 2) may include the rich execution environment (REE), the trusted execution environment (TEE), and the secure execution environment (SEE).

In a case of simply applying post quantum cryptography (hereinafter, PQC) to a system having a general secure execution environment, a large load may be caused in the system. In a case of simply applying PQC to a system having a general secure execution environment, degradation of quality of a service provided by the application may be caused. Since a PQC algorithm has a large key length and heavy calculation compared to modern cryptography.

The electronic device 201 according to various embodiments of the present document may, in order to perform the PQC algorithm having a large key length and heavy calculation compared to modem cryptography, distinguish an execution environment of performing a KEM algorithm and an execution environment of performing an electronic signature. That is, the PQC algorithm may be classified into a PQC electronic signature algorithm and a KEM algorithm. The PQC electronic signature algorithm may be mainly used at a time of key generation, and the KEM algorithm may be used whenever an individual communication session starts. A key encapsulation mechanism (KEM) algorithm may include a method of encrypting a symmetric key with a public key for transmission. The KEM algorithm may use a method of encrypting a symmetric key with a public key in order to securely transmit a symmetric key in asymmetric encryption. The KEM algorithm may include an encapsulation stage and a decapsulation stage. In the encapsulation stage, the electronic device 201 may generate a random symmetric key, and may encrypt the random symmetric key with a public key of a receiver. In the decapsulation stage, the receiver may decrypt a capsule by using a private key and may extract an original symmetric key. The receiver may, thereafter, decrypt an actual message or data by using an extracted symmetric key.

The PQC electronic signature algorithm may be used for guaranteeing integrity of a message and identity of a sender. The PQC electronic signature algorithm may be safely used even if a quantum computer is realized.

The PQC electronic signature algorithm with relatively low call frequency may be performed, in the secure execution environment (SEE) having a high security level, by the secure processor (e.g., the secure processor 223 of FIG. 2). The KEM algorithm with relatively high frequency may be performed, in the trusted execution environment (TEE), by the main processor (e.g., the main processor 221 of FIG. 2). The main processor 221 may, at a point in time when a KEM key pair is first generated, be linked with the secure execution environment (SEE). The secure processor 223 may perform the role of a certificate authority (CA), and may indicate such in a certificate. The electronic device 201 may, at a time of certificate verification, provide a relatively higher trust level in the secure execution environment (SEE) than in the rich execution environment (REE). A certificate authorized (certificated) in the secure execution environment of the electronic device 201 may, at a point in time of being verification externally, provide a relatively higher trust level compared to a certificate issued in the rich execution environment (REE) and the trusted execution environment (TEE).

At least one application 412 intending to utilize a PQC electronic signature algorithm may, at a time of a key generation request, together transfer an option of a standard certificate including a public key and an alias of a key to be generated. An option may, for example, include whether to prefer utilization of the secure execution environment (SEE). Alternatively, an option may, for example, mean contents to be included in an X.509 certificate like KeyUsage. An alias of a key to be generated means an arbitrary value used by the application 412 to designate a specific key.

KeyStore 414 receives a key generation request from the application 412 and transfers the key generation request to KeyStoreHAL 416. HAL may mean a hardware abstraction layer. KeyStoreHAL 416 may transfer a request of the application 412 to SEEDriver 424 operating in the trusted execution environment (TEE). TA may mean a trusted application operating in the trusted execution environment (TEE).

An interface of the secure execution environment (SEE) region may use a standard application protocol data unit (APDU) format. SEEDriver 424 may convert a request of the application 412 into an APDU message and may transfer the APDU message to PQCKeyMaster 432.

In a case where WrapKey is not generated, PQCKeyMaster 432 may generate WrapKey once initially (i.e., at a first point in time) and may store WrapKey in the security memory 435. WrapKey may mean a key not exposed outside the secure execution environment (SEE). When generating WrapKey, PQCKeyMaster 432 may use symmetric cryptography generated by a specific method (e.g., AES256). Symmetric cryptography may mean cryptography performing encryption and decryption by using an identical key. Plain text may mean a bit string or a character string to which a cryptographic algorithm is not applied. Cipher text may mean a bit string, or a character string to which a cryptographic algorithm is applied. PQCKeyMaster 432 may generate WrapKey once initially and, without directly storing data, may maintain such with only an execution module. PQCKeyMaster 432 may reduce time required to move previously stored data at a time of module update, and may improve an update speed.

After WrapKey is generated, PQCKeyMaster 432 may read, from the security memory 435, KeyID corresponding to WrapKey. KeyID may mean a unique value corresponding to an individual key generated in the secure execution environment (SEE). Whenever KeyID is issued, the security memory 435 may increase a KeyID value to respond to a next request. The security memory 435 may distinguish a key by using KeyID. KeyStore 414 may store information on an individual key, and the application 412 which generated the individual key, and an alias assigned to the key by the corresponding app.

For encryption using WrapKey, PQCKeyMaster 432 may generate an initialization vector (IV) and a key encryption key (KEK) derived from WrapKey. PQCKeyMaster 432 may, without directly encrypting with WrapKey, derive KEK and may use a different symmetric cryptography key for each PQC key pair of an individual application 412. PQCKeyMaster 432 may, without directly encrypting with WrapKey, derive KEK and may efficiently use limited storage capacity of the secure execution environment (SEE). WrapKey may be used as a means for securely transmit or store an encrypted key.

The electronic device 201 may encrypt a symmetric key (or a secret key) for encrypting actual data by using the key encryption key (KEK). KEK may be derived from WrapKey.

The electronic device 201 may perform encryption with KEK to encrypt (wrap) a key generated by a request of an application, and may store an encrypted key (wrapped key) in the rich execution environment (REE). That is, the electronic device 201 may control an exposure of a key generated by a request of an application such that the key is not exposed, in a plain-text state, outside the secure execution environment. A plain-text state may mean a state in which wrapping is not performed.

An initialization vector (IV) may mean a random number used to initialize block chain encryption in an encryption process. The electronic device 201 may randomly generate the IV. The IV may be newly generated for each new message or session. The electronic device 201 may, whenever the same message is transmitted multiple times, differently encrypt the message through the IV, and may prevent an attack through pattern analysis.

PQCKeyMaster 432 may, by using a cryptographic library 434 used in the secure execution environment (SEE), generate a PQC electronic signature key pair requested from the application 412.

PQCKeyMaster 432 may encrypt a secret key in the generated PQC electronic signature key pair by using the key encryption key (KEK). PQCKeyMaster 432 may, by using the cryptographic library 434 used in the secure execution environment (SEE), include a public key in a certificate. In this case, the certificate may mean a certificate signed with a PQC electronic signature secret key (Provisioned SigSecKey).

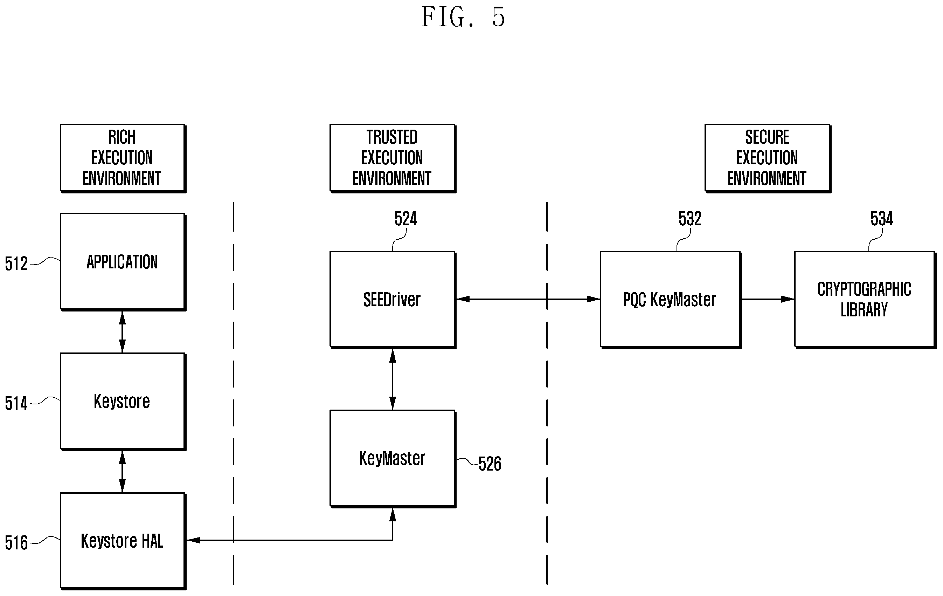

PQCKeyMaster 432 may, based on that a request for generation and storage of a PQC key pair is received from the application 412, identify whether storage space remains in the security memory 435. PQCKeyMaster 432 may, in a case where storage space remains enough to store the PQC key pair in the security memory 435, store a PQC secret key of the application 412 in the security memory 435. A case where storage space does not remain enough to store the PQC key pair in the security memory 435 will be described in FIG. 5.

After storing the PQC secret key in the security memory 435, PQCKeyMaster 432 may transmit an APDU message to SEEDriver 424 operating in the trusted execution environment (TEE). The APDU message may include at least one of KeyID, an encrypted PQC electronic signature private key of the application 412, initialization vector, a PQC electronic signature certificate, or whether a PQC secret key is stored in the secure execution environment (SEE).

SEEDriver 424 may parse the APDU message into a value which KeyStore 414 may read. Parsing may mean a process of extracting desired data and converting the desired data into a state that is easy to process. SEEDriver 424 may parse the APDU message and may transmit the APDU message to KeyStoreHAL 416. KeyStoreHAL 416 may transmit a received APDU message to KeyStore 414.

KeyStore 414 may verify a received certificate, and, based on that a chain of trust is verified, may together store AppId which is a unique value of the application 412 which first requests generation of a PQC electronic signature key, an alias designated by the application 412, and a value generated by PQCKeyMaster 432 (e.g., a PQC electronic signature key pair). Thereafter, KeyStore 414 may return a PQC electronic signature key generation result to the application 412.

FIG. 5 is a block diagram describing a process in which a KEM key pair is generated in the electronic device according to an embodiment.

According to FIG. 5, the electronic device (e.g., the electronic device 201 of FIG. 2) may include the rich execution environment (REE), the trusted execution environment (TEE), and the secure execution environment (SEE).

FIG. 5 shows a procedure in which a PQC KEM key pair is generated in the electronic device 201 according to various embodiments of the present document. A largest difference between a PQC KEM key pair generation procedure and electronic signature key pair generation of FIG. 4 is that a generation location of a PQC algorithm key pair requested by the application 512 is the trusted execution environment (TEE), not the secure execution environment (SEE).

The electronic device 201 may, by generating a PQC KEM key pair in the trusted execution environment (TEE), provide a fast calculation speed compared to the secure execution environment (SEE).

The application 512 may request generation of a KEM key pair to KeyStore 514 in order to utilize a PQC KEM algorithm. The application 512 may request KeyStore 514 API of a framework together with an option. An option may, for example, mean whether to prefer utilization of the secure execution environment (SEE). Alternatively, an option may, for example, mean contents to be included in an X.509 certificate like KeyUsage. The application 512 may transfer an alias of a key to be generated to KeyStore 514. An alias of a key to be generated means an arbitrary value used by the application 512 to designate a specific key.

KeyStore 514 transfers a received request from the application 512 to KeyStoreHAL 516. KeyStoreHAL 516 transfers a received request to KeyMaster.

KeyMaster 526 may generate a PQC KEM key pair in the trusted execution environment (TEE). KeyMaster 526 may, with respect to a generated PQC KEM private key, derive KEK in the trusted execution environment (TEE), generate IV, and perform encryption (wrapping).

KeyMaster 526 may request, to SEEDriver 524, a signature of a certificate of the application 512. The certificate may include a PQC public key.

SEEDriver 524 generates an APDU message for communicating with the secure execution environment (SEE) and transfers a request of KeyMaster 526 to PQCKeyMaster 532.

PQCKeyMaster 532 may, by using a cryptographic library 534, generate a signature with a PQC electronic signature secret key uniquely possessed for each the secure execution environment (SEE), and may complete the certificate.

PQCKeyMaster 532 may transmit an APDU message to SEEDriver 524. The APDU message may include the completed certificate and the generated signature. SEEDriver 524 may, based on the received APDU message, parse the certificate, and may transmit the parsed certificate to KeyMaster 526.

KeyMaster 526 may transmit, to KeyStoreHAL 516, the certificate generated in the secure execution environment (SEE) and an encrypted (wrapped) KEM private key.

KeyStoreHAL 516 may transmit, to KeyStore 514, the transferred certificate and the encrypted (wrapped) KEM private key.

KeyStore 514 may perform verification of the transferred certificate with a public key of the secure execution environment (SEE). KeyStore 514 may, when succeeding in verification, store the transferred certificate and the encrypted private key in a database of KeyStore 514 (e.g., the memory 130 of FIG. 1). KeyStore 514 may store, in the database, an identifier (AppId) of an app which requested generation of a PQC key pair and an alias assigned by the app.

KeyStore 514 may transmit, to the application 512, a result of key generation and storage.

FIG. 6 is a block diagram describing a process of performing electronic signature based on a secure execution environment (SEE) in the electronic device according to an embodiment.

According to FIG. 6, the electronic device (e.g., the electronic device 201 of FIG. 2) may include the rich execution environment (REE), the trusted execution environment (TEE), and the secure execution environment (SEE).

The application 612 may, in order to use a PQC electronic signature, transmit, to KeyStore 614, an alias of a PQC electronic signature key pair having been generated and a message requiring a signature, and may request a signature.

KeyStore 614 may identify that a private key corresponding to a PQC electronic signature is stored in the secure execution environment (SEE). KeyStore 614 may be operatively connected with the security memory 635 to perform communication, and may identify whether a private key corresponding to a PQC electronic signature is stored in the secure execution environment (SEE). KeyStore 614 may, by using KeyID, identify whether a private key corresponding to a PQC electronic signature is stored in the secure execution environment (SEE). Alternatively, KeyStore 614 may, based on a request of application protocol data unit (APDU), identify whether a private key corresponding to a PQC electronic signature is stored in the secure execution environment (SEE).

KeyStore 614 may, based on that the private key corresponding to the PQC electronic signature is stored in the secure execution environment (SEE), transmit, to KeyStoreHAL 616, KeyID corresponding to the private key and a message requiring a signature.

KeyStoreHAL 616 may receive KeyID corresponding to the private key and a message requiring a signature, and may transmit the received KeyID and the received message to SEEDriver 624 in the trusted execution environment.

SEEDriver 624 may convert KeyID corresponding to the private key and a message requiring a signature into an APDU message, and may transmit the APDU message to PQCKeyMaster 632 of the secure execution environment (SEE).

PQCKeyMaster 632 may read, from the security memory 635, a PQC electronic signature private key corresponding to KeyID. PQCKeyMaster 632 may, by using a cryptographic library 634 of the secure execution environment (SEE), generate a signature for a requested message. PQCKeyMaster 632 may transmit, to SEEDriver 624, an APDU message including the generated signature. PQCKeyMaster 632 may, instead of receiving, in an encrypted (wrapped) state, a private key for a signature and restoring the private key into a signable state, read a PQC electronic signature private key corresponding to KeyID and may perform a signature without a separate key restoration process. In this case, compared to a process of restoring a private key and performing a signature in the secure execution environment (SEE), the electronic device 201 may relatively reduce resource consumption of the secure processor (e.g., the secure processor 223 of FIG. 2), and may reduce time required for calculation.

SEEDriver 624 may transmit the received APDU message to KeyStoreHAL 616. KeyStoreHAL 616 may transmit the received APDU message and the generated signature to KeyStore 614. KeyStore 614 may transmit, to the application 612 which requested an electronic signature, the received signature.

According to an embodiment, KeyStoreHAL 616 and SEEDriver 624 may retransmit received data, and may strengthen security of the electronic device 201 through access control. KeyStoreHAL 616 and SEEDriver 624 may be referred to as a pass-through module.

KeyStoreHAL 616 may, at a first boot point in time of individual devices, generate a random-number-based security channel with SEEDriver 624 and KeyMaster. SEEDriver 624 and KeyMaster may, initially (i.e., at a first point in time), generate KeyStoreHAL 616 and a security channel. SEEDriver 624 and KeyMaster may process, as a security violation, all requests of another module located in the rich execution environment (REE). SEEDriver 624 and KeyMaster may receive and process only a request of KeyStoreHAL 616 until an OS of the rich execution environment (REE) performs a factory reset.

PQCKeyMaster 632 located in the secure execution environment (SEE) may, by using SEEDriver 624, generate a security channel at a manufacturing process point in time. SEEDriver 624 located in the trusted execution environment (TEE) may have an exclusive authority capable of accessing PQCKeyMaster 632 of the secure execution environment (SEE). PQCKeyMaster 632 may determine, until a manufacturer's hardware module replacement point in time, access of another module located in the trusted execution environment (TEE) as a security violation.

KeyStoreHAL 616 may perform an identical operation in processors of various manufacturers providing the trusted execution environment (TEE). SEEDriver 624 may support a standard interface operating in a specific operating system (e.g., Android). An application protocol data unit (APDU) may mean a communication protocol used to exchange data between a smart card and a smart card reader. The electronic device 201 may, when exchanging information between a smart card and a device reading the smart card, package information and transmit the packaged information. Here, a package may include the APDU. The APDU may include two types, a command APDU and a response APDU. A command APDU may mean a message instructing a smart card to perform a certain task. A response APDU may mean a message by which a smart card sends a result of the task to a reader. A structure and a format of the APDU may be defined according to an international standard referred to as ISO/IEC 7816-4.

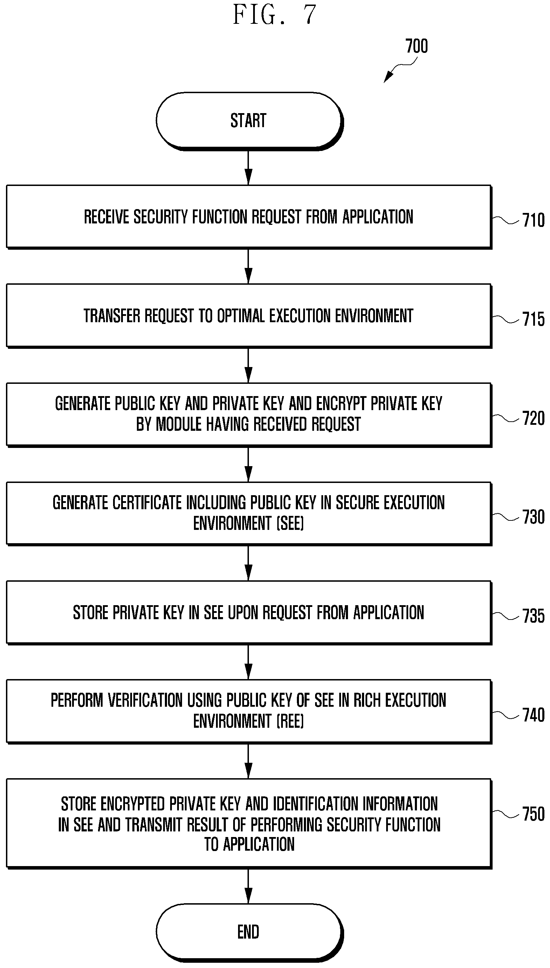

FIG. 7 illustrates, as a flowchart, a method of providing a security function in the electronic device according to an embodiment.

The operations described through FIG. 7 may be implemented based on instructions capable of being stored in a computer-readable medium or memory (e.g., the memory 130 of FIG. 1). An illustrated method 700 may be executed by the electronic device (e.g., the electronic device 201 of FIG. 2) described through FIG. 1 to FIG. 6, and technical features described above are to be omitted below. An order of respective operations of FIG. 7 may be changed, some operations may be omitted, and some operations may be performed simultaneously.

In operation 710 of FIG. 7, the main processor (e.g., the main processor 221 of FIG. 2) may receive a security function request from an application (e.g., the application 612 of FIG. 6).

In operation 715 of FIG. 7, the main processor 221 may transfer the security function request to an optimal execution environment (e.g., the trusted execution environment (TEE) or the secure execution environment (SEE)). The main processor 221 may, based on that a security function request of an application is identified in the rich execution environment (REE), transfer the security function request to a module corresponding to the trusted execution environment (TEE) or the secure execution environment (SEE). In operation 720 of FIG. 7, the main processor 221 may, by using a module (e.g., the trusted execution environment (TEE) or the secure execution environment (SEE)) having received the security function request, generate a public key and a private key, and may encrypt the private key. The main processor 221 may, in the trusted execution environment (TEE), generate a key pair including a public key and a private key. The main processor 221 may, with respect to a generated private key, perform encryption (wrapping) by using a key encryption key (KEK) and an initialization vector (IV).

In operation 730 of FIG. 7, the main processor 221 may, in the secure execution environment (SEE), generate a certificate including a public key. The main processor 221 may request, to the secure processor (e.g., the secure processor 223 of FIG. 2) operating in the secure execution environment (SEE), generation of the certificate. The secure processor 223 may perform a signature, and may transmit a result to the main processor 221.

In operation 735 of FIG. 7, the main processor 221 may, based on a request from an application, store a private key in the secure execution environment (SEE).

In operation 740 of FIG. 7, the main processor 221 may, in the rich execution environment (REE), perform verification by using a public key of the secure execution environment (SEE). The main processor 221 may, based on that a signature is received from the secure processor 223, perform, in the rich execution environment (REE), verification with respect to the received signature and the certificate.

The main processor 221 may perform verification by using a public key of the secure execution environment (SEE). The main processor 221 may, by performing verification in the rich execution environment (REE), increase a calculation speed relatively and reduce time required for verification, compared to performing verification in the secure execution environment (SEE).

The main processor 221 may perform verification by using a public key of the secure execution environment (SEE), and may control to cause a signature to be performed in the secure execution environment (SEE). The main processor 221 may maintain a security level relatively high, compared to performing a signature in the rich execution environment (REE) or the trusted execution environment (TEE).

In operation 750 of FIG. 7, the main processor 221 may store an encrypted private key and identification information in the secure execution environment (SEE), and may transmit a result of performing the security function. The main processor 221 may store, in the memory 130, a certificate, an encrypted private key, and identification information (ID) of the application 612 which requested verification, based on that the security function is performed. The main processor 221 may transmit, to the application 612, a result of performing the security function.

According to an embodiment, the main processor 221 may, based on that information on an encrypted private key and a message requiring a signature are received from the application 612 in the rich execution environment (REE), identify whether a corresponding private key is stored in the security memory 225 in the secure execution environment (SEE).

The main processor 221 may, based on that the corresponding private key is stored in the security memory 225, transmit, to the trusted execution environment (TEE), information on the private key and a message requiring a signature. The main processor 221 may, by using the trusted execution environment, transmit, to the secure processor 223, information on the private key and a message requiring a signature.

The secure processor 223 may, based on received information on the private key, identify the private key stored in the security memory 225, and may, by using the identified private key, generate a signature for a message requiring a signature.

The electronic device 201 according to various embodiments of the present document may, without fixing an environment for execution of a PQC algorithm to the secure execution environment (SEE) having a relatively high security level or to the trusted execution environment (TEE) having a relatively fast calculation speed, use all of a plurality of environments for each situation. The electronic device 201, in consideration of characteristics of a PQC algorithm, may perform a KEM algorithm in the trusted execution environment (TEE) having a relatively fast calculation speed. On the other hand, the electronic device 201 may perform a final signature of a certificate including a public key in the secure execution environment (SEE) having a relatively high security level. The electronic device 201 may perform the final signature of the certificate in the secure execution environment (SEE) having a relatively high security level, thereby being able to maintain verification and a security level of the certificate at a level of the secure execution environment (SEE).

The electronic device 201 according to various embodiments of the present document may, by omitting at least one operation of transmission of an encrypted (wrapped) PQC electronic signature private key, derivation of a KEK capable of decrypting an encrypted PQC private key, or decryption (unwrapping) of the PQC electronic signature private key, reduce time required for encryption and calculation.

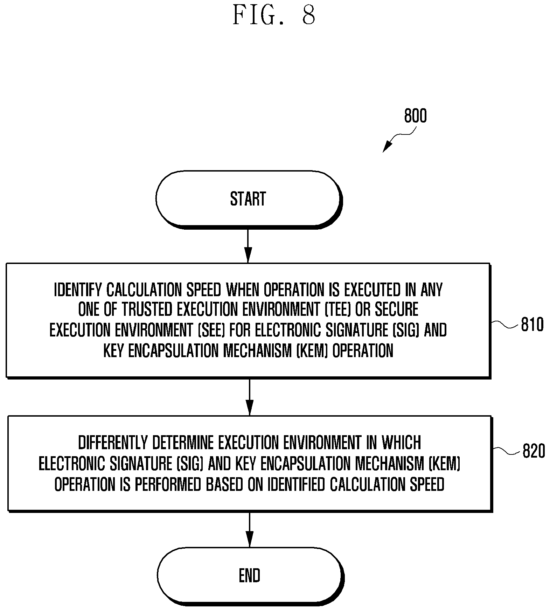

FIG. 8 illustrates, as a flowchart, an operation method of the electronic device according to an embodiment.

The operations described through FIG. 8 may be implemented based on instructions capable of being stored in a computer-readable medium or memory (e.g., the memory 130 of FIG. 1). An illustrated method 800 may be executed by the electronic device (e.g., the electronic device 201 of FIG. 2) described through FIG. 1 to FIG. 6, and technical features described above are to be omitted below. An order of respective operations of FIG. 8 may be changed, some operations may be omitted, and some operations may be performed simultaneously.

In operation 810, the main processor (e.g., the main processor 221 of FIG. 2) may, in performing an electronic signature (sig) and key encapsulation mechanism (KEM) operation, identify a calculation speed when the operation is executed in any one of the trusted execution environment (TEE) or the secure execution environment (SEE).

According to an embodiment, an electronic signature (sig) operation may include stages of key generation, signature generation, and signature verification. A key for verifying a signature may be initially (i.e., at a first point in time) generated in the secure execution environment (SEE). Also, a signature generation process may also be executed in the secure execution environment (SEE). The main processor 221 may calculate a calculation speed when a signature verification process is executed in the trusted execution environment (TEE). Also, the main processor 221 may calculate a calculation speed when a signature verification process is executed in the secure execution environment (SEE).

According to an embodiment, a key encapsulation mechanism (KEM) operation may include stages of KEM key pair generation, encapsulation, and decapsulation. A KEM key pair may include a private key and a public key.

In operation 820, the main processor 221 may, based on the identified calculation speed, differently determine an execution environment in which the electronic signature (sig) and key encapsulation mechanism (KEM) operation is performed.

The main processor 221 may, when executing a signature verification process in the secure execution environment (SEE), in a case where a calculation speed exceeds a designated level, determine that there is no problem in a service speed, and may execute the signature verification process in the secure execution environment (SEE). On the other hand, the main processor 221 may, when executing the signature verification process in the secure execution environment (SEE), in a case where a calculation speed is less than the designated level, determine that the calculation speed is relatively slow and there is a problem in a service provision. In this case, the main processor 221 may, instead of the secure execution environment (SEE), execute the signature verification process in the trusted execution environment (TEE) having a relatively fast calculation speed.

According to an embodiment, the main processor 221 may execute private key generation in the trusted execution environment (TEE), and may execute public key generation in the secure execution environment (SEE). A public key may require relatively more security in a generation process because an issuer's signature is included. The main processor 221 may execute, in the secure execution environment (SEE), a public key generation process for which security is relatively important. The main processor 221 may, with respect to private key generation, encapsulation, and decapsulation stages, based on a calculation speed, execute the stages in the secure execution environment (SEE), or may execute in the trusted execution environment (TEE).

The main processor 221 may, when executing private key generation, encapsulation, and decapsulation stages in the secure execution environment (SEE), in a case where a calculation speed exceeds the designated level, determine that there is no problem in a service speed, and may execute the private key generation, encapsulation, and decapsulation stages in the secure execution environment (SEE). On the other hand, the main processor 221 may, when executing private key generation, encapsulation, and decapsulation stages in the secure execution environment (SEE), in a case where a calculation speed is less than the designated level, determine that the calculation speed is relatively slow and there is a problem in a service provision. In this case, the main processor 221 may, instead of the secure execution environment (SEE), execute the private key generation, encapsulation, and decapsulation stages in the trusted execution environment (TEE) having a relatively fast calculation speed.

## Claims

1. An electronic device, comprising:
a main processor (221) configured to perform an operation in a rich execution environment (REE) (310) and a trusted execution environment (TEE) (320); and
a secure processor (223) physically separated from the main processor and configured to perform an operation in a secure execution environment (SEE) (330),
wherein the main processor:
in performing an electronic signature (sig) and key encapsulation mechanism (KEM) operation, identifies a calculation speed when the operation is executed in any one of the trusted execution environment (TEE) or the secure execution environment (SEE); and
differently determines an execution environment in which the electronic signature (sig) and key encapsulation mechanism (KEM) operation is performed based on the identified calculation speed, and
wherein the execution environment comprises the secure execution environment (SEE) and the trusted execution environment (TEE).

2. The electronic device of claim 1, wherein the main processor:
transfers, based on that a security function request of an application is identified in the rich execution environment (REE), the security function request to any one execution environment of the trusted execution environment (TEE) or the secure execution environment;
generates a post quantum cryptography (PQC) key pair including a public key and a private key on a module having received the security function request in either the trusted execution environment (TEE) or the secure execution environment;
performs encryption (wrapping) by using a key encryption key (KEK) and an initialization vector (IV) with respect to the generated private key;
generates a certificate including the public key in the secure execution environment (SEE);
stores the private key based on the request of the application;
performs a security function in the rich execution environment (REE) by using a public key of the secure execution environment (SEE) with respect to the certificate generated in the secure execution environment (SEE);
stores, in a memory (130), the certificate, the encrypted private key, and identification information (ID) of the application requesting performing of the security function based on that the security function is performed; and
transmits a result of performing the security function to the application.

3. The electronic device of claim 1, wherein the main processor:
identifies whether a corresponding private key is stored in a security memory (225) in the secure execution environment (SEE), based on that information on an encrypted private key and a message requiring a signature are received from an application in the rich execution environment (REE);
transfers the information on the private key and the message requiring the signature to the trusted execution environment (TEE), based on that the corresponding private key is stored in the security memory; and
transmits, by using the trusted execution environment, the information on the private key and the message requiring the signature to the secure processor, and
wherein the secure processor:
identifies, based on the received information on the private key, the private key stored in the security memory; and
generates a signature for the message requiring the signature by using the identified private key.

4. The electronic device of claim 1, wherein the main processor:
receives a key generation request from an application;
converts the request from the application into a message using an application protocol data unit (APDU) format; and
transmits the converted message to the secure processor (223).

5. The electronic device of claim 4, wherein the secure processor:
generates, based on that WrapKey is not generated, WrapKey to store the WrapKey in a security memory; and
reads, from the security memory, a unique value corresponding to the WrapKey, based on that the WrapKey is generated, and
wherein the WrapKey means a key not exposed outside an execution environment in which a security function request of the application is received, and the WrapKey is made by using symmetric cryptography.

6. The electronic device of claim 5, wherein the secure processor generates an initialization vector (IV) and a key encryption key (KEK) derived from the WrapKey, and generates a PQC electronic signature key pair including a public key and a secret key.

7. The electronic device of claim 6, wherein the secure processor performs encryption by using a key encryption key (KEK) with respect to the secret key among the generated PQC electronic signature key pair, and includes, in a certificate, the public key among the generated PQC electronic signature key pair.

8. The electronic device of claim 4, wherein the secure processor:
in a case where a storage space remains enough to store a generated PQC key pair in a security memory (435), stores a PQC secret key of an application (412) in the security memory; and
transmits, to the main processor, a message including at least one of KeyID, an encrypted PQC electronic signature private key of the application (412), an initialization vector, a PQC electronic signature certificate, or whether a PQC secret key is stored in the secure execution environment (SEE).

9. The electronic device of claim 8, wherein the main processor:
parses a message received from the secure processor such that the memory is readable in the trusted execution environment (TEE);
verifies a certificate included in the received message;
stores, in the memory, AppId which is a unique value of an application first requesting generation of a PQC electronic signature key, an alias designated by the application, and a generated PQC electronic signature key pair based on that the verification succeeds; and
transmits, to the application, a result of verifying the certificate and a result of generating the PQC electronic signature key.

10. The electronic device of claim 1, wherein the main processor:
generates a PQC KEM key pair in trusted execution environment (TEE), based on that KEM key pair generation is requested from the application;
performs encryption (wrapping) by using an initialization vector (IV) and a key encryption key (KEK) derived from WrapKey; and
requests, to the secure processor, authentication for the KEM key pair generation.

11. The electronic device of claim 10, wherein the secure processor:
performs authentication by using a PQC electronic signature secret key; and
transmits an authentication result to the main processor, and
wherein the main processor:
verifies a received certificate with a public key of the secure execution environment (SEE), based on that the authentication result is received from the secure processor;
stores, in the memory, the received certificate and an encrypted (wrapped) KEM private key based on that the verification succeeds; and
transmits, to the application, a result for KEM key pair generation and the authentication result.

12. The electronic device of claim 1, wherein the main processor:
receives, from the application, information on a key pair for a PQC electronic signature and a message requiring a signature;
identifies whether a private key corresponding to the key pair for the PQC electronic signature is stored in a security memory; and
transmits, to the secure processor, KeyID corresponding to the private key and the message requiring the signature based on that the private key corresponding to the key pair for the PQC electronic signature is stored in the security memory, and
wherein the secure processor:
reads, from the security memory, a PQC electronic signature private key corresponding to the KeyID based on that the KeyID corresponding to the private key and the message requiring the signature are received from the main processor;
generates, on the message requiring the signature, a signature by using the read PQC electronic signature private key; and
transmits, to the main processor, the generated signature and the message.

13. An operation method of an electronic device, in performing an electronic signature (sig) and key encapsulation mechanism (KEM) operation, the operation method comprising:
identifying a calculation speed when the operation is executed in any one of a trusted execution environment (TEE) or a secure execution environment (SEE); and
differently determining an execution environment in which the electronic signature (sig) and key encapsulation mechanism (KEM) operation is performed based on the identified calculation speed,
wherein the execution environment comprises the secure execution environment (SEE) and the trusted execution environment (TEE).

14. The operation method of claim 13, further comprising:
transferring, based on that a verification request of an application is identified in a rich execution environment (REE), the verification request to the trusted execution environment (TEE);
generating a PQC key pair including a public key and a private key in the trusted execution environment (TEE);
performing encryption (wrapping) by using a key encryption key (KEK) and an initialization vector (IV) with respect to the generated private key;
requesting, to a secure processor operating in the secure execution environment (SEE), a signature for a certificate;
performing, based on that the signature is received from the secure processor, verification for the received signature and the certificate, in the rich execution environment (REE), by using a public key of the secure execution environment (SEE); and
storing, in a memory (130), the certificate, the encrypted private key, and identification information (ID) of an application requesting the verification based on that the verification succeeds, and transmitting, to the application, a result of the verification.

15. The operation method of claim 14, further comprising:
identifying whether a corresponding private key is stored in a security memory (225) in the secure execution environment (SEE), based on that information on an encrypted private key and a message requiring a signature are received from an application in the rich execution environment (REE);
transferring the information on the private key and the message requiring the signature to the trusted execution environment (TEE), based on that the corresponding private key is stored in the security memory; and
transmitting, by using the trusted execution environment, the information on the private key and the message requiring the signature to the secure processor;
identifying, based on the received information on the private key, the private key stored in the security memory, and generating a signature for the message requiring the signature by using the identified private key; and
receiving, from the application, a key generation request, converting the request into a message using an application protocol data unit (APDU) format, and transmitting, to the secure processor, the converted message.
